**Europäisches Patentamt**

**European Patent Office**

**Office européen des brevets**

(11) Veröffentlichungsnummer: **0 120 493**

**A2**

(12) **EUROPÄISCHE PATENTANMELDUNG**

(21) Anmeldenummer: **84103321.0**

(22) Anmeldetag: **26.03.84**

(51) Int. Cl.³: **F 24 D 3/00**
**F 24 D 19/10, F 24 H 1/22**

(30) Priorität: **24.03.83 DE 3310760**

(43) Veröffentlichungstag der Anmeldung:
**03.10.84 Patentblatt 84/40**

(84) Benannte Vertragsstaaten:
**AT BE CH DE FR GB IT LI LU NL SE**

(71) Anmelder: **Müller, Friedrich**
**Im Mühlfeld 31**
**D-7180 Crailsheim(DE)**

(72) Erfinder: **Müller, Friedrich**
**Im Mühlfeld 31**
**D-7180 Crailsheim(DE)**

(74) Vertreter: **Lauw, Rudolf C. W.**
**Karwinskistrasse 1**
**D-8000 München 60(DE)**

(54) **Anordnung zur Warmwasser-Bereitung mittels eines durch einen Gegenstrom-Wärmetauscher geführten, von einem Fernwärme-Erzeuger angelieferten Fernwärme-Mediums.**

(57) Anordnung zur Warmwasser-Bereitung mittels eines durch einen (Gegenstrom-) Wärmetauscher (4) geführten, von einem Fernwärme-Erzeuger (5) angelieferten (Fernwärme-)Mediums (3) sowie zur Warmwasser-Bevorratung in einem Warmwasser-Speicher (2), wobei durch von einem Regelgerät (18) koordinierte Einrichtungen (7,9,13,16,21) zur Regelung sowohl der Durchflußmenge (DF) des am Eingang (35) des Wärmetauschers (4) mit einer bestimmten Vorlauf-Temperatur angelieferten Mediums (3) als auch der Durchflußmenge (Dw) des am Eingang (34) des Wärmetauschers (4) mit einer bestimmten Einlauf-Temperatur zugeführten Kaltwassers (KW) – in Abhängigkeit von einer beliebig festlegbaren Höchst-Rücklauf-Temperatur des Mediums (3) und einer beliebig festlegbaren Mindest-Auslauf-Temperatur des Warmwassers (WW) an den Ausgängen (32,33) des Wärmetauschers (4) – die jeweiligen Durchflußmengen (DF,Dw) des Mediums (3) und des Warmwassers (WW) durch den Wärmetauscher (4) unabhängig voneinander derart dosierbar sind, daß die Rücklauf-Temperatur (TRF) des zum Fernwärme-Erzeuger (5) zurückzuführenden Mediums (3) eine beliebig festlegbare Höchst-Rücklauf-Temperatur unter Toleranz einer beliebig festlegbaren Temperatur-Abweichung nicht überschreitet, und daß die Auslauf-Temperatur (TAW) des dem Warmwasser-Speicher (2) zuzuführenden Warmwassers (WW) eine beliebig festlegbare Mindest-Auslauf-Temperatur unter Toleranz einer beliebig festlegbaren Temperatur-Abweichung nicht unterschreitet und höchstens bis zu einer beliebig festsetzbaren Höchst-Auslauf-Temperatur hin unter Toleranz einer beliebig festlegbaren Temperatur-Abweichung nicht überschreitet.

FIG.1

EP 0 120 493 A2

Friedrich Müller
Im Mühlfeld 31
D7180 Crailsheim

---

Anordnung zur Warmwasser-Bereitung mittels eines durch einen
Gegenstrom-Wärmetauscher geführten, von einem Fernwärme-
Erzeuger angelieferten Fernwärme-Mediums

---

Die Erfindung bezieht sich auf eine Anordnung zur Warmwasser-Bereitung mittels eines durch einen Gegenstrom-Wärmetauscher geführten, von einem Fernwärme-Erzeuger angelieferten Fernwärme-Mediums.

Anordnungen dieser Art sind beispielsweise in der DE-OS 25 08 135 sowie in der DE-OS 30 24 652 beschrieben. Diese Anordnungen wiesen jedoch unter anderem den Nachteil auf, daß es trotz Verwendung von Gegenstrom-Wärmetauschern nicht möglich ist, die hohe Vorlauf-Temperatur des angelieferten Fernwärme-Mediums auf eine möglichst niedrige, wesentlich unterhalb der erzeugten Warmwasser-Temperatur liegende Temperatur kontinuierlich abzukühlen und trotzdem Warmwasser von beliebiger Brauchtemperatur zu bereiten. Es ist bekanntlich das Ziel jedes Fernwärme-Erzeugers, das Fernwärme-Medium, unabhängig von seiner zum Abnehmer gelieferten Vorlauf-Temperatur (zB 140 $^\circ$C), von diesem mit möglichst niedriger Rücklauf-Temperatur (zB 20 $^\circ$C) zurückgeliefert zu bekommen.

Es ist daher Ziel und Zweck der Erfindung, eine Anordnung der eingangs genannten Art zu schaffen, mit der eine beliebig hohe Vorlauf-Temperatur auf eine möglichst niedrige, wesentlich unterhalb der zu erzeugenden Warmwasser-Temperatur liegende Rücklauf-Temperatur kontinuierlich abgekühlt, gleichzeitig jedoch aus aus einem Wasserleitungsnetz, einer natürlichen Quelle od. dgl. gelieferten Kaltwasser ein Warmwasser mit beliebig festlegbarer Mindest-Temperatur kontinuierlich bereitet und zum Verbrauch bereitgehalten werden kann.

DiesesZiel wird gemäß der Erfindung dadurch erreicht, daß durch von einem Regelgerät koordinierte Einrichtungen zur Regelung sowohl der Durchflußmenge des am Eingang des Gegenstrom-Wärmetauschers mit einer bestimmten Vorlauf-Temperatur angelieferten Fernwärme-Mediums, als auch der Durchflußmenge des dem Eingang des Gegenstrom-Wärmetauschers mit einer bestimmten Einlauf-Temperatur zugeführten Kaltwassers - in Abhängigkeit von einer beliebig festlegbaren Höchst-Rücklauf-Temperatur des Fernwärme-Mediums und einer beliebig festlegbaren Mindest-Auslauf-Temperatur des Warmwassers an den Ausgängen des Gegenstrom-Wärmetauschers - die jeweiligen Durchflußmengen des Fernwärme-Mediums und des Warmwassers durch den Gegenstrom-Wärmetauscher unabhängig voneinander derart dosierbar sind, daß die Rücklauf-Temperatur des zum Fernwärme-Erzeuger zurückzuführenden Fernwärme-Mediums eine beliebig festlegbare Höchst-Rücklauf-Temperatur unter Toleranz einer beliebig festlegbaren Temperatur-Abweichung nicht überschreitet, und daß die Auslauf-Temperatur des dem Warmwasser-Speicher zuzuführenden Warmwassers eine beliebig festlegbare Mindest-Auslauf-Temperatur unter Toleranz einer beliebig festlegbaren Temperatur-Abweichung nicht unterschreitet und höchstens bis zu einer beliebig festsetzbaren Höchst-Auslauf-Temperatur hin unter Toleranz einer beliebig festlegbaren Temperatur-Abweichung nicht überschreitet.

Diese vollkommen automatisch arbeitende, von einem für alle Eventualitäten programmierbaren Regelgerät stufenlos regulierbare Anordnung erfüllt das erfindungsgemäße Ziel in hervorragender Weise: Zum einen kann damit aus Kaltwasser beliebiger Eintrittstemperatur eine stets ausreichende Menge an Warmwasser beliebiger Brauchtemperatur kontinuierlich bereitet und zum Verbrauch bereitgehalten werden. Zum andern kann das Fernwärme-Medium von seiner beliebig hohen Vorlauf-Temperatur kontinuierlich auf eine sehr niedrige, wesentlich unterhalb der erzeugten Warmwasser-Temperatur und nur wenig über der Kaltwasser-Temperatur liegende Rücklauf-Temperatur abgekühlt werden. Je niedriger die Temperatur des in den Gegenstrom-Wärmetauscher eingeleiteten Kaltwassers ist, desto niedriger kann die Rücklauf-Temperatur des Fernwärme-Mediums sein.

Erfinderische Weiterbildungen und vorteilhafte Ausgestaltungen des Erfindungsgegenstandes ergeben sich aus den Unteransprüchen.

Weitere Merkmale, Einzelheiten und Vorteile ergeben sich aus nachfolgender Beschreibung vorteilhafter Ausführungsformen der Erfindung sowie aus der in der Anlage beigefügten Zeichnung es zeigen:

Fig. 1 eine schematische Darstellung einer ersten Ausführungsform der Erfindung mit einem einteiligen Gegenstrom-Wärmetauscher und einem einteiligen Warmwasser-Speicher;

Fig. 2 eine schematische Darstellung einer zweiten Ausführungsform der Erfindung mit einem zweigeteilten Gegenstrom-Wärmetauscher und einem zweiteiligen Warmwasser-Speicher;

Fig. 3 eine schematische Darstellung einer dritten Ausführungsform der Erfindung mit einem zweigeteilten Gegenstrom-Wärmetauscher, einem Warmwasserspeicher sowie einem als Puffer dienenden Zwischenspeicher für das Fernwärme-Medium und

Fig. 4 eine schematische Darstellung der Temperatur-Verläufe von Brauchwasser und Fernwärme-Medium bei Durchlauf durch den Gegenstrom-Wärmetauscher gemäß Fig. 1.

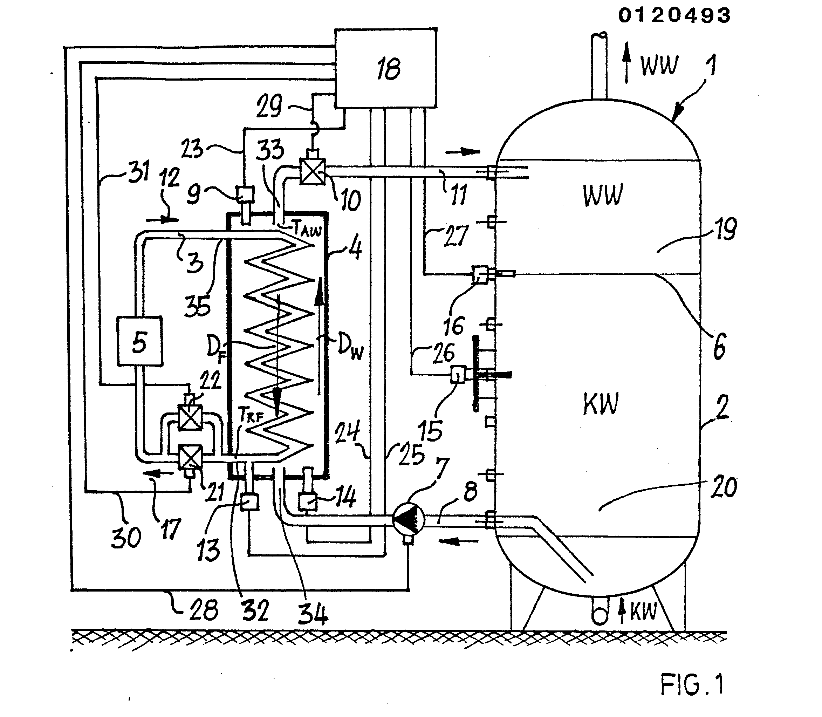

Fig. 1 zeigt eine erfindungsgemäße Anordnung 1 in einer ersten Ausführungsform. Hierbei ist ein WW-Speicher 2, wie nachfolgend beschrieben wird, über Rohrleitungen 8,11 mit einem Gegenstrom-Wärmetauscher 4 verbunden, der in Gebrauchslage vorzugsweise von oben nach unten von einem von einem Fernwärme-Erzeuger 5 über eine Vorlaufleitung 12 mit Vorlauf-Temperatur $T_{VF}$ an seinen Eingang 35 angelieferten Fernwärme-Medium 3 durchströmt werden kann. Das Fernwärme-Medium 3 strömt über eine am entgegengesetzten Ende des Gegenstrom-Wärmetauschers 4 angeschlossene Rücklaufleitung 17 wieder zum Fernwärme-Erzeuger 5 zurück, nachdem es im Gegenstrom-Wärmetauscher 4 Wärmeenergie an das zu erwärmende Brauchwasser (KW/WW) abgegeben hat.

Eine in der KW-Rohrleitung 8 angeordnete Pumpe 7 sorgt für den Transport des Brauchwassers (KW) durch den Gegenstrom-Wärmetauscher 4 in dessen Gebrauchslage vorzugsweise von unten nach oben, also der Strömungsrichtung des Fernwärme-Mediums 3 entgegengesetzt, wie Fig. 1 zeigt.

Die jeweiligen Durchflußmengen $D_F, D_W$ des Fernwärme-Mediums 3 und des Brauchwassers (KW/WW) sind durch ein Regelgerät 18 zur Erreichung der erfindungsgemäßen Aufgabe voneinander unabhängig regulierbar, wie nachfolgend noch beschrieben werden wird.

Zunächst muß dafür gesorgt werden, daß das Gesamt-Fassungsvermögen des WW-Speichers 2 um etwa 25 bis 50 Prozent der in diesem zu bevorratenden WW-Menge größer dimensioniert wird (zB sollte man ein Speichervolumen von etwa 200 Litern wählen, wenn stets 150 Liter Warmwasser vorzuhalten sind). Dies ist nur eine Faustregel, die jedoch nach oben und unten hin unter Berücksichtigung der jeweiligen örtlichen oder persönlichen Gegebenheiten abgeändert werden könnte. Es ist nämlich, wie nachfolgend noch eingehend ausgeführt wird, erforderlich, im in Gebrauchslage unteren Teil 20 des WW-Speichers 2 einen genügend großen, ständig verfügbaren Vorrat an KW bereitzuhalten, aus welchem der Gegenstrom-Wärmetauscher 4 gespeist wird. Dieses KW sollte dem Gegenstrom-Wärmetauscher 4 möglichst mit der Temperatur zugeführt werden, mit der es vom öffentlichen Brauchwasser-Netz her angeliefert wird.

Der WW-Speicher 2 ist an beliebiger Stelle, vorzugsweise in seinem oberen Drittel oder auf halber Höhe an der gewünschten Schichtgrenze 6 zwischen WW- und KW-Zone 19,20 mit einem Thermofühler 16 zur Ermittlung der dortigen Temperatur versehen.

Der Gegenstrom-Wärmetauscher 4 weist an seinem in Gebrauchslage oberen Ende am Brauchwasser-Ausgang 33 einen Thermofühler 9, an seinem in Gebrauchslage unteren Ende am Fernwärme-Medium-Ausgang 32 einen Thermofühler 13 auf.

Außerdem sind in der Rücklaufleitung 17 für das Fernwärme-Medium 3 noch ein Ventil, Schieber od. dgl. 21 und gegebenenfalls als By-Pass hierzu parallel ein weiteres Ventil, Schieber od. dgl. 22 angeordnet.

Für die Funktion der erfindungsgemäßen Anordnung nicht unbedingt erforderlich, aber nützlich und zweckdienlich könnte die Anordnung eines Ventils, Schieber od. dgl. 10 in der WW-Rohrleitung 11, ein Thermofühler 14 im Gegenstrom-Wärmetauscher 4 nahe des KW-Eingangs 34 sowie ein Thermofühler 15 im/am WW-Speicher 2 in Gebrauchslage unterhalb des Thermofühlers 16 sein, wie nachfolgend noch erörtert werden wird.

Zur Vervollständigung der Aufzählung der zur erfindungsgemäßen Anordnung zugehörigen Ausrüstung sei noch gesagt, daß das Regelgerät 18 mit den Thermofühlern 9,13,14,15,16 über Temperatur-Meßleitungen 23,25,24,26,27 sowie mit der Pumpe 7 und den Ventilen, Schiebern od. dgl. 10,21 und 22 über Steuerleitungen 28,29,30,31 verbunden ist.

Die erfindungsgemäße Aufgabe, die Rücklauftemperatur $T_{RV}$ des vom Fernwärme-Erzeuger 5 mit beliebiger Vorlauftemperatur $T_{VF}$ (zB im Sommer 70 $^O$C, im Winter 140 $^O$C) angelieferten Fernwärme-Mediums 3 vor Einspeisung in die Rücklaufleitung 17 zum Fernwärme-Erzeuger 5 auf eine möglichst niedrige, beliebig einstellbare, höchstens 10 $^O$C oberhalb der Kaltwasser-Temperatur (von zB 8-10 $^O$C) liegende Temperatur abzukühlen, und trotzdem am Warmwasser-Ausgang 33 des Gegenstrom-Wärmetauschers 4 eine beliebig einstellbare Warmwasser-Ausgangs-Temperatur $T_{AW}$ (zB stets $\geq$ 55 $^O$C) zu erhalten, wird auf folgende Weise gelöst:

(A) Betrachtung der Brauchwasserseite:

Das gesamte System, das heißt der Gegenstrom-Wärmetauscher 4 und der WW-Speicher 2, ist betriebsbereit an das Brauchwasser- und Fernwärme-Netz angeschlossen. Das Regelgerät 18 wird auf "WW-Bereitung" geschaltet. Es ist so programmiert, daß es die Pumpe 7 einschaltet, wenn der Thermofühler 16 im/am WW-Speicher 2 eine bestimmte, beliebig einstellbare Mindest-Temperatur (zB 55 $^O$C) unterschreitet und der Thermofühler 9 am Gegenstrom-Wärmetauscher 4 eine bestimmte, beliebig einstellbare Mindest-Temperatur (zB 54 $^O$C) überschreitet. Ist eine dieser beiden Bedingungen nicht erfüllt, so erhält die Pumpe 7 vom Regelgerät 18 keinen Start-Impuls und bleibt stehen. Nach Ingangsetzung der Pumpe 7 wird aus dem in Gebrauchslage tiefsten Teil des WW-Speichers 2 KW in den Gegenstrom-Wärmetauscher 4 gepumpt, und zwar mit einer stufenlos einstellbaren, durch die stufenlos einstellbare Drehzahl der Pumpe 7 bestimmten Durchflußmenge $D_W$. Dadurch wird das im oberen Teil des Gegenstrom-Wärmetauschers 4 enthaltene WW über die WW-Rohrleitung 11 so lange in den WW-Speicher 2 gefördert, bis der Thermofühler 16 die gewünschte Mindest-Temperatur (zB 55 $^O$C) an das Regelgerät 18 meldet, welches daraufhin die Pumpe 7 abschaltet und eine weitere Förderung von WW in den WW-Speicher 2 unterbindet. Nahe des Thermofühlers 16 bildet sich eine den WW-Bereich 19 und den KW-Bereich 20 voneinander trennende, relativ stabile Schichtgrenze 6. Diese Schichtgrenze 6 kann durch entsprechende Anordnung von mit dem Regelgerät 18 ständig verbundenen, jedoch beliebig auf dieses schaltbaren Thermofühlern im/am WW-Speicher 2 beliebig nach oben oder nach unten verlagert werden, wodurch sich der WW-Vorrat entsprechend der Ortsverlagerung verkleinert oder vergrößert.

Die WW-Überleitung aus dem Gegenstrom-Wärmetauscher 4 in den WW-Speicher 2 kann durch das in die WW-Rohrleitung 11 eingefügte Ventil, Schieber od. dgl. 10 mengenmäßig genauer dosiert werden, als dies mit Hilfe der Pumpe 7 allein der Fall sein kann. Das Ventil 10 öffnet allmählich, wenn die WW-Ausgangs-Temperatur $T_{AW} < 54\ ^{\circ}C$, und schließt allmählich, wenn $T_{AW} > 54\ ^{\circ}C$ ist, auch bis die Pumpe 7 dann schließlich im Leerlauf weiterläuft. Das Ventil 10 kann aus dem vollkommen geschlossenen Zustand stufenlos mit verschiedenen Durchflußquerschnitten bis hin zum maximal möglichen Durchflußquerschnitt betrieben werden. Es verhindert auch eine sog. Schwerkraftzirkulation.

(B) Betrachtung der Fernwärmeseite:

Das mit einer Vorlauf-Temperatur $T_{VF}$ von beispielsweise 70 $^{\circ}C$ / 140 $^{\circ}C$ über die Vorlaufleitung 12 am Eingang 35 in den Gegenstrom-Wärmetauscher 4 einlaufende Fernwärme-Medium liefe unter geringer Abkühlung im Gegenstrom-Wärmetauscher 4 durch die Rücklaufleitung 17 zum Fernwärme-Erzeuger 5 zurück, wenn man es nicht daran hinderte. Dies erfolgt gemäß der Erfindung mittels eines in die Rücklaufleitung 17 eingesetzten Ventils, Schiebers od. dgl. 21, welches mit stufenlos erweiterbaren Durchflußquerschnitten nur öffnet, wenn die vom Thermofühler 13 ermittelte Rücklauf-Temperatur $T_{RF}$ das aus dem Gegenstrom-Wärmetauscher 4 kommenden Fernwärme-Mediums 3 eine bestimmte, beliebig festlegbare Höchst-Rücklauf-Temperatur $T_{HRF}$ (zB 20 $^{\circ}C$) unterschreitet. Ist die gemessene Rücklauf-Temperatur $T_{RF}$ am Ausgang 32 des Gegenstrom-Wärmetauschers 4 im Vergleich zu der vorher beliebig (zB auf 20 $^{\circ}C$) festgesetzten Höchst-Rücklauf-Temperatur zu hoch, so bleibt das Ventil 21 ganz oder zumindest so weit geschlossen, daß nur ein kleiner, mengen- und energiemäßig unbedeutender Prozentsatz an Fernwärme-Medium 3 der
möglichen Durchflußmenge an Fernwärme-Medium 3 bei ganz
geöffnetem Ventil 21 in die Rücklaufleitung 17 gelangen
und eine ebenso kleine Menge an heißem Fernwärme-Medium 3
über die Vorlaufleitung 12 in den Gegenstrom-Wärmetauscher 4
nachströmen kann. Dieser Minimaldurchfluß sorgt dafür, daß
- falls dies erforderlich sein sollte - ausreichend hoch
temperiertes Fernwärme-Medium 3 für die WW-Bereitung im
Gegenstrom-Wärmetauscher 4 zur Verfügung steht, was bei
völligem Strömungsstillstand des Fernwärme-Mediums 3 und
der damit verbundenen allmählichen Abkühlung nicht gewährleistet wäre. Wird vom Thermofühler 16 im/am WW-Speicher 2
keine Unterschreitung der dort gewünschten WW-Temperatur
festgestellt, so bleibt das Ventil 21 völlig geschlossen,
um zu verhindern, daß - wenn noch ein ausreichend großer WW-
Vorrat von gewünschter Temperatur vorhanden ist - bei
Stillstand der (kalten) Brauchwassereinspeisung in den Gegenstrom-Wärmetauscher 4 und damit nicht erfolgender Energieabgabe an das Brauchwasser zu warmes Fernwärme-Medium 3
in die Rücklaufleitung 17 gelangt und dadurch Verluste entstehen.

Als By-Pass zum Ventil 21 könnte man ein hierzu parallel
geschaltetes, auf kleine Durchflußmengen besonders fein einstellbares Ventil, Schieber od. dgl. 22 vorsehen, das anstell
des Ventils 21 für den Fall eines erforderlichen Minimalabflusses von Fernwärme-Medium 3 in die Rücklaufleitung 17 vom
Rgelgerät 18 zu teilweiser Öffnung mit mehr oder weniger
großem Durchflußquerschnitt angesteuert werden könnte.

Grundsätzlich sollten alle Ventile 10,21,22 und die Pumpe 7
geschlossen bzw. außer Betrieb sein, wenn kein Warmwasser
benötigt wird.

Die erfindungsgemäße Anordnung 1 erfüllt die ihr zugeordnete Aufgabe, sowohl den erforderlichen WW-Vorrat von gewünschter Temperatur $T_{AW}$ (zB 55 $^O$C) bereitzustellen, als auch das Fernwärme-Medium 3 mit der kleinstmöglichen Rücklauf-Temperatur $T_{RF}$ (zB 20 $^O$C) in die Rücklaufleitung 17 zurückzuspeisen, insbesondere dann in vorteilhafter Weise, wenn dafür gesorgt ist, daß das dem Gegenstrom-Wärmetauscher 4 zugeführte Brauchwasser eine möglichst niedrige Einlauftemperatur $T_{EW}$ (zB 8-10 $^O$C) aufweist und beibehält. Würde diese Einlauftemperatur $T_{EW}$ mehr als 20 $^O$C betragen, wäre das gesetzte erfindungsgemäße Ziel, wie oben beschrieben, nicht mehr erreichbar.

Bei Normalbetrieb ohne Fehlschaltung des Regelgeräts 18, ohne Fehlfunktion seitens der zur Anordnung 1 gehörigen Aggregate und bei in kleineren Abständen erfolgender WW-Entnahme aus dem WW-Speicher 2 ist nach menschlichem Ermessen gewährleistet, daß die gewünschte KW/WW-Schichtung im WW-Speicher 2 besteht und aufrecht erhalten bleibt. Das heißt, die Schichtgrenze 6 befindet sich in Höhe des Thermofühlers 16, wobei die WW-Zone 19 darüber, die KW-Zone 20 darunter und in Höhe der Schichtgrenze 6 beiderseits derselben eine etwa 2-5 cm hohe Mischzone liegt.

Der Betriebszustand der an sich voll-automatisch und selbstregelnd arbeitenden Anordnung 1 gemäß der Erfindung wird jedoch kritisch, wenn aus dem WW-Speicher 2 während langer Zeiträume, zB während eines mehrwöchigen Urlaubs, kein Warmwasser gezapft wird. Es würde dann mit Sicherheit folgender Zustand eintreten:

Der Thermofühler 16 des WW-Speichers 2 meldet dem Regelgerät 18 ein Absinken der WW-Temperatur an der Schichtgrenze 6, die nicht durch Nachlaufen von Kaltwasser (KW) zum Thermofühler 16 von der unteren KW-Zone 20 her infolge von nach oben hin erfolgenden WW-Zapfens, sondern durch allmähliche Abkühlung des in der WW-Zone 20 vorhandenen WW (auf zB 45-50 $^O$C) verursacht wird. Zeigt auch der Thermofühler 9 am Gegenstrom-Wärmetauscher 4 eine ausreichend hohe WW-Auslauf-Temperatur (zB 54 $^{o}$C) an, so veranlaßt das Regelgerät 18 durch Einschalten der Pumpe 7 eine Wiederaufwärmung der oberen WW-Zone 19 mit WW mit der gewünschten Mindest-Auslauf-Temperatur $T_{AW}$ (zB 55 $^{o}$C) und schaltet die Pumpe 7 erst wieder ab, wenn der Thermofühler 16 eine Temperatur von zb 55 $^{o}$C meldet. Dabei wird durch das "frische" Warmwasser mit einer Temperatur von 55 $^{o}$C das vorher in der WW-Zone 19 an seiner Stelle vorhandene "alte" Warmwasser mit 45-50 $^{o}$C Temperatur im WW-Speicher 2 nach unten gedrückt. Dieses Spiel setzt sich nun so lange fort, bis auch der letzte Rest an Kaltwasser mit einer Temperatur von 8-10 $^{o}$C aus dem WW-Speicher 2 verschwindet. Dieses Kaltwasser wird, ohne die Möglichkeit des Nachschubs von "frischem" Kaltwasser niedriger Temperatur aus dem Kaltwasser-Netzsystem (zB auf 35-40 $^{o}$C) aufgewärmt und durch abgekühltes Warmwasser von oben her ersetzt. Dadurch kann sich das Fernwärme-Medium 3 im Gegenstrom-Wärmetauscher 4 bis zu dessen Ausgang 32 hin nicht mehr auf die festgelegte Rücklauf-Temperatur $T_{RF}$ (zB 20 $^{o}$C) abkühlen, mit der Folge, daß der Thermofühler 13 stets eine zu hohe Temperatur mißt, und das Regelgerät 18 daraufhin keine Maßnahme zur Öffnung des Ventils 21 trifft, da $T_{RF}$ ja > 20 $^{o}$C ist.

Das sinnvoll erdachte Zusammenspiel der Aggregate der Anordnung 1 käme dadurch völlig zum Erliegen bzw. außer Ordnung, wenn man nicht zu dessen Aufrechterhaltung Gegenmaßnahmen ergriffe. Diese könnten vorzugsweise darin bestehen, daß man mit Abstand unterhalb des Thermofühlers 16 einen weiteren Thermofühler 15 anordnet, der nun zusammen mit dem Thermofühler 16 gemeinsam seine Meßdaten an das Regelgerät 18 meldet. Das Regelgerät 18 ist nun so programmiert, daß es nicht schon bei Unterschreitung der Mindest-Temperatur (zB 55 $^{o}$C) am Thermofühler 16, sondern erst bei gleichzeitiger Unterschreitung einer geringeren Temperatur (zB 35 $^{o}$C) am Thermofühler 15 die Pumpe 7 zur Einleitung der Wiederaufwärmung der WW-Zone 19 des WW-Speichers 2 in Gang setzt. Somit hält sich die Aufheizung des gesamten WW-Speichers 2 in Grenzen, und es verbleiben immer noch genügende Kaltwassermengen in der KW-Zone 20 mit niedriger Temperatur (zB 10-15 $^{o}$C), welche ein planmäßiges Funktionieren der Durchflußregelung des Fernwärme-Mediums 3 durch den Gegenstrom-Wärmetauscher 4 gewährleisten.

Der Thermofühler 15 übt somit bezüglich des Thermofühlers 16 eine Art Kontrollfunktion aus, das heißt, er blockiert die Meldung des Thermofühlers 16 einer Unterschreitung der dort vorzuhaltenden Mindest-Temperatur (zB 55 $^{o}$C) so lange, bis er selbst bei sich die Unterschreitung einer beliebig festlegbaren Mindest-Temperatur (zB 35 $^{o}$C) feststellt und das Regelgerät 18 daraufhin veranlaßt, im Sinne vorstehender Beschreibung initiativ zu werden.

Der zusätzlich zum Thermofühler 16 im/am WW-Speicher 2 vorgesehene Thermofühler 15 verhindert somit bzw. verzögert zumindest ein unerwünschtes Aufwärmen des ganzen WW-Speichers 2 mit all den unangenehmen Folgen, die dieses mit sich bringt.

Es könnte sein, daß sich infolge eines Störfalles oder einer irrtümlichen Fehlschaltung am Regelgerät 18 durch den Bediener kein Kaltwasser sehr niedriger Temperatur mehr im WW-Speicher 2 befindet, sondern Brauchwasser von zB 40 $^{o}$C. Das Ventil 21 würde dann geschlossen bleiben und kein "frisches" warmes Fernwärme-Medium 3 zum Nachheizen des Warmwassers im oberen Bereich des Gegenstrom-Wärmetauschers 4 mehr nachströmen. Die Funktion der Anordnung 1 käme völlig zum Erliegen.

In diesem Falle führt das Regelgerät 18 einen Temperaturvergleich zwischen den Temperaturen an den Thermofühlern 13 und 14 durch, dessen Ergebnis es sein könnte, daß das Regelgerät 18 zur Wiederaufnahme der Funktion der Anordnung 1 aktiv wird.

Man könnte zB festlegen, daß das Regelgerät 18 das Ventil 21 trotz zu hoher Temperatur (zB 40 $^{o}$C) am Thermofühler 13 immer dann öffnet, wenn zwischen den Thermofühlern 13 und 14 eine Temperatur-Differenz von beispielsweise höchstens 10 $^{\circ}$C (also zwischen 0 $^{\circ}$C und 10 $^{\circ}$C) besteht.

Beispiele:

(a) Thermofühler 13 mißt 30 $^{\circ}$C, Thermofühler 14 mißt 15 $^{\circ}$C: Ventil 21 bleibt geschlossen. Damit unterbleibt auch ein Fernwärme-Nachschub in den Gegenstrom-Wärmetauscher 4.

(b) Thermofühler 13 mißt 30 $^{\circ}$C, Thermofühler 14 mißt 20 $^{\circ}$C: Ventil 21 öffnet geringfügig. Es laufen geringe Mengen an Fernwärme-Medium in den Gegenstrom-Wärmetauscher 4 nach.

(c) Thermofühler 13 mißt 30 $^{\circ}$C, Thermofühler 14 mißt 25 $^{\circ}$C: Ventil 21 öffnet ganz. Nachströmendes "frisches" Fernwärme-Medium 3 soll eine rasche WW-Bereitung ermöglichen, obwohl die geforderte Höchst-Rücklauf-Temperatur $T_{RF}$ von zB 20 $^{\circ}$C überschritten ist.

Der gleiche Sachverhalt ergäbe sich auch auf höherem Temperatur-Niveau, beispielsweise:

(d) Thermofühler 13 mißt 50 $^{\circ}$C, Thermofühler 14 mißt 35 $^{\circ}$C: Ventil 21 bleibt geschlossen.

(e) Thermofühler 13 mißt 50 $^{\circ}$C, Thermofühler 14 mißt 40 $^{\circ}$C: Ventil 21 öffnet geringfügig.

(f) Thermofühler 13 mißt 50 $^{\circ}$C, Thermofühler 14 mißt 45 $^{\circ}$C: Ventil 21 öffnet ganz.

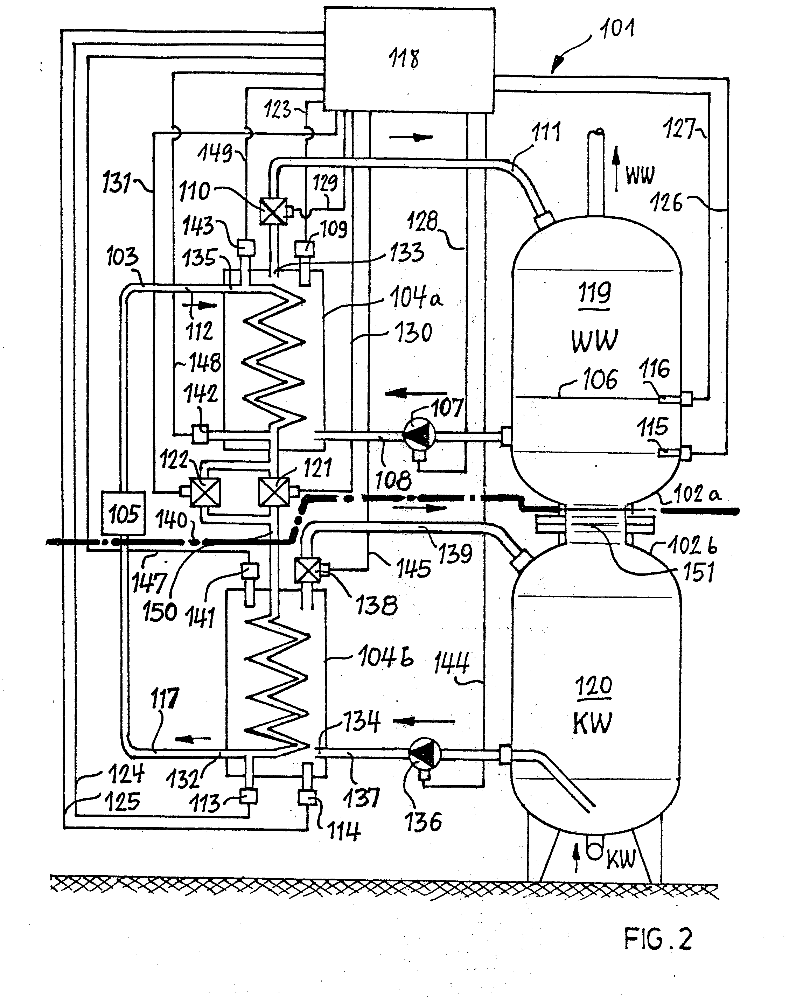

Die in Fig. 1 schematisch dargestellte Anordnung 1 weist nur einen WW-Speicher 2 auf. Stattdessen könnten auch mehrere einzelne, über- oder nebeneinander angeordnete, auch räumlich voneinander getrennte WW-Speicher bei Verwendung von nur einem Gegenstrom-Wärmetauscher 4 vorgesehen werden. Stellt man zB zwei kleinere Einzel-WW-Speicher (wie etwa in folgend beschriebener Fig. 2 zu sehen) übereinander, so sollte man zur Erreichung einer besseren Schichtung durch entsprechende Anordnung des die Lage der Schichtgrenze 6 bestimmenden Thermofühlers die Schichtgrenze 6 möglichst in die Engstelle zwischen beiden Einzel-WW-Speichern legen.

In Fig. 2 ist eine zweite Ausführungsform der Erfindung dargestellt, die dem Prinzip nach der in Fig. 1 gezeigten ersten Ausführungsform entspricht.

Der Unterschied der in Fig. 2 dargestellten Ausführungsform zur Fig. 1 besteht im wesentlichen darin, daß man durch Teilung sowohl des Gegenstrom-Wärmetauschers 4 (Fig. 1) in zwei separate, durch eine Rohrleitung 150 miteinander verbundene Gegenstrom-Wärmetauscher 104a,104b (Fig. 2), als auch des WW-Speichers 2 (Fig. 1) in zwei separate, miteinander verbundene WW-Speicher 102a,102b (Fig. 2) bei Bedarf eine schnellere Aufheizung nach WW-Entnahme erzielt. Diese Anordnung 101 empfiehlt sich insbesondere bei großen WW-Speichern bzw. bei notwendigerweise großer WW-Vorhaltung.

Anstelle der beiden WW-Speicher 102a,102b könnte man auch einen einzigen großen Speicher installieren. Es zeigt sich aber, daß die gezeigte Ausführung mit zwei aneinander befestigten oder miteinander verbundenen kleineren Speichern 102a,102b wegen der zwischen diesen befindlichen Engstelle 151 vorteilhafterweise eine bessere Brauchwasser-Schichtung mit sich bringt, wenn man davon absieht, daß das Fassungsvermögen zweier kleiner Speicher bei gleicher Gesamthöhe etwas geringer ist, als das eines einzigen großen Speichers.

Der über der strichpunktierten Linie 140 gezeigte Teil der Anordnung 101 entspricht im wesentlichen der Anordnung 1 gemäß Fig. 1 und wird daher nachfolgend nicht näher beschrieben. Die übereinstimmenden Teile der Anordnung 1 gemäß Fig. 1 und der Anordnung 101 gemäß Fig. 2 sind zum besseren Verständnis mit den gleichen Bezugszeichen versehen, mit der Maßgabe, daß zu den Bezugsziffern in Fig. 2 jeweils die Zahl 100 hinzuaddiert ist (also anstelle 1 = 101, 3 = 103 usw.). Es entsprechen sich also folgende Teile in Fig. 1 und Fig. 2:

0120493

| | | |
|---|---|---|
| 1 = 101 | 10 = 110 | 23 = 123 |
| 2 = 102a | 11 = 111 | 26 = 126 |
| 3 = 103 | 12 = 112 | 27 = 127 |
| 4 = 104a | 15 = 115 | 28 = 128 |
| 5 = 105 | 16 = 116 | 29 = 129 |
| 6 = 106 | 18 = 118 | 30 = 130 |
| 7 = 107 | 19 = 119 | 31 = 131 |
| 8 = 108 | 21 = 121 | 33 = 133 |
| 9 = 109 | 22 = 122 | 35 = 135 |

Außer den übereinstimmenden Teilen der oberen Hälfte der Anordnung 101 gemäß Fig. 2 weist diese gegenüber der Anordnung 1 gemäß Fig. 1 noch folgende weitere Teile auf:

Am Eingang 135 der Vorlaufleitung 112 ist ein Thermofühler 143 vorgesehen, der über eine Temperatur-Meßleitung 149 mit dem Regelgerät 118 verbunden ist. Am Ausgang des oberen Gegenstrom-Wärmetauschers 104a ist in die Verbindungsleitung 150 zum unteren Gegenstrom-Wärmetauscher 104b ein Thermofühler 142 mit einer zum Regelgerät 118 führenden Temperatur-Meßleitung 148 angeordnet.

Der untere Gegenstrom-Wärmetauscher 104b weist am oberen Ende nahe des Brauchwasser-Ausgangs einen Thermofühler 141 und an seinem unteren Ende nahe des Brauchwasser-Eingangs einen Thermofühler 114 auf, welche über Temperatur-Meßleitungen 147 und 125 mit dem Regelgerät 118 verbunden sind.

Am unteren Ende ist am Ausgang 132 des Gegenstrom-Wärmetauschers 104b ein Thermofühler 113 zur Ermittlung der Rücklauftemperaur $T_{RF}$ des zur Rücklaufleitung 117 geführten Fernwärme-Mediums 103 vorgesehen, der über eine Temperatur-Meßleitung 124 mit dem Regelgerät 118 verbunden ist.

Der Gegenstrom-Wärmetauscher 104b ist mit der unteren Zone 120 des WW-Speichers 102b durch zwei Rohrleitungen 137 (unten) und 139 (oben) in der in Fig. 2 dargestellten Weise verbunden. In der zum Brauchwassereingang 134 führenden Rohrleitung 137 ist eine Pumpe 136 mit Temperatur-Meßleitung 144 zum Regelgerät 118 vorgesehen. Am Brauchwasser-Ausgang aus dem Gegenstrom-Wärmetauscher 104b ist in die Rohrleitung 139 zum WW-Speicher 102b ein Verntil, Schieber od. dgl. 138 vorgesehen, das über die Temperatur-Meßleitung 145 mit dem Regelgerät 118 verbunden ist.

Nachfolgend wird die Funktion der Anordnung 101 gemäß Fig. 2 näher beschrieben:

Die Abkühlung der Eintrittstemperatur des Fernwärme-Mediums 3 erfolgt hier kontinuierlich etwa je zur Hälfte in einer der beiden zweigeteilten Gegenstrom-Wärmetauscher 104a, 104b (zB in 104a: von 140$^{\circ}$C/oben auf 80$^{\circ}$C/unten und in 104b: von 80$^{\circ}$C oben auf 20$^{\circ}$C/unten).

Jedem der beiden Gegenstrom-Wärmetauscher 104a,104b ist ein Teil eines ebenfalls zweigeteilten WW-Speichers 102a, 102b zugeordnet, in denen das Kaltwasser (KW) ebenfalls kontinuierlich auf die gewünschte Mindest-WW-Temperatur erwärmt wird, und zwar in entgegengesetzter Richtung (zB in 102b: von 10$^{\circ}$C/unten auf 30$^{\circ}$C/oben und in 102a: von 30$^{\circ}$C/unten auf 55$^{\circ}$C/oben).

die an den einzelnen Positionen der Gegenstrom-Wärmetauscher 104a,104b sowie der WW-Speicher 102a,102b gemessenen Temperaturen werden über die Temperatur-Meßleitungen an das Regelgerät 118 gemeldet und von diesem so verarbeitet, daß es zu gegebener Zeit den Pumpen 107,136 sowie den Ventilen 110,121,122,138 über Steuerleitungen die entsprechenden Regel-Befehle erteilt.

Im Prinzip spielt sich bei der Anordnung gemäß Fig. 2 der gleiche Ablauf ab, wie bei der Anordnung 1 gemäß Fig. 1. Der Unterschied hier besteht darin, daß sich bei der Anordnung gemäß Fig. 2 das aus der Anordnung gemäß Fig. 1 bekannte Verfahren auf zwei unterschiedlichen Temperaturniveaus abspielt. Das Regelgerät bestimmt hier automatisch die optimale Ausgangstemperatur des Fernwärme-Mediums 203 aus dem oberen Wärmetauscher 104a.

Hierzu dient der Thermofühler 143, der die Eingangstemperatur des Fernwärme-Mediums 103 ständig mißt und
die Ergebnisse an das Regelgerät 118 weiterleitet.
Dieser regelt dann die gewünschten Temepraturen an
der Nahtstelle zwischen den Teilen 104a,104b ein.
Beispiele:
Fernwärme-Temperatur beträgt $140^{O}C$:
Regelgerät 118 regelt Ausgang/104a auf $80^{O}C$ und
Eingang/104b auf $80^{O}C$.
Fernwärme-Temperatur beträgt $70^{O}C$:
Regelgerät 118 regelt Ausgang/104a auf $35^{O}C$ und
Eingang/104b auf $35^{O}C$.

Regelgerät 218 führenden Temperatur-Meßleitung 271 vorgesehen.

Die Speicher 202 und 260 sind, wie sich bereits aus vorstehender Beschreibung ergibt, ihrer Funktion nach vollkommen verschieden: Während der Speicher 202 ein üblicher WW-Speicher mit der hierfür notwendigen technischen Ausführung (zB Innen-Emaillierung) ist, ist der Speicher 260 ein Puffer- oder Zwischenspeicher für das aus dem oberen Gegenstrom-Wärmespeicher 204a kommende und über die Rohrleitung 263 zugeführte Fernwärme-Medium 203. Letzterer kann aus einem einfachen Tank ohne Innen-Emaillierung bestehen. Er dient lediglich als eine Art Zwischen-Lager für das aus dem oberen Gegenstrom-Wärmetauscher 204a noch mit relativ hoher Temperatur (zB 30 $^O$C) eingespeiste Fernwärme-Medium 203. Es würde dem Ziel dieser Erfindung widersprechen, wenn man letzteres mit dieser Temperatur schon in die Rücklaufleitung 217 zurückführen würde. Also wird das 30-gradige Fernwärme-Medium 203 noch mittels des Gegenstrom-Wärmetauschers 204b abgearbeitet, wo es in sinnvoller Weise das aus der Kaltwasser-Rohrleitung 268 gelieferte Brauchwasser von zB 10 $^O$C auf 30 $^O$C vorheizen kann, ehe es über die Rohrleitung 262 dem WW-Speicher 202 zugeführt wird. Dort braucht das auf beispielsweise 30 $^O$C vorgewärmte Brauchwasser mittels des oberen Gegenstrom-Wärmetauschers 204a nur noch um weitere 25 $^O$C erwärmt zu werden, um so die geforderte WW-Temperatur $T_{AW}$ von zB 55 $^O$C zu erreichen.

Diese Vorheizung ist insbesondere bei großem WW-Bedarf und/ oder bei gewünschter schneller Aufheizung sinnvoll und zweckdienlich.

Da die beiden Speicher 202 und 260 wegen der in ihnen gelagerten unterschiedlichen Medien keine direkte Verbindung haben dürfen, sind sie durch eine dazwischen angeordnete Dichtplatte 264 voneinander getrennt. Sie könnten bei geeigneter Anordnung auch räumlich getrennt nebeneinander angeordnet sein, da es hierbei nicht auf eine gewünschte Temperaturschichtung ankommt.

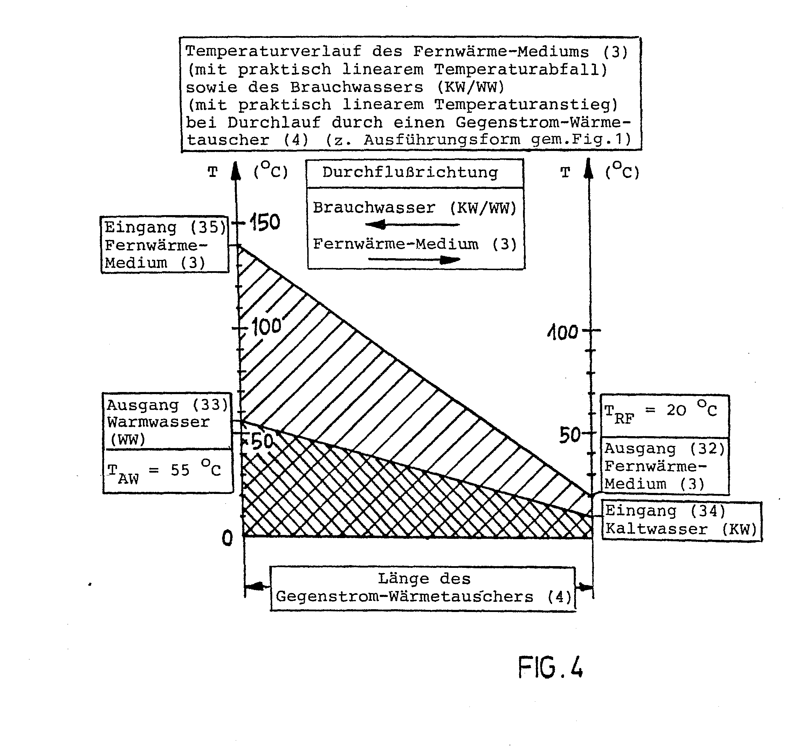

Fig. 4 zeigt die Aufgabe der Erfindung in einer einfachen schematischen Darstellung: Es soll ein möglichst hoher Prozentsatz der Wärmeenergie eines mit hoher Vorlauftemperatur (von zB $T_{VF}$ = 140 $^{o}$C) angelieferten Fernwärme-Mediums 3 auf Brauchwasser (KW/WW) in einem Durchlauf durch einen Gegenstrom-Wärmetauscher 4 in diesem mittels Regelung der Durchflußmengen $D_F, D_W$ sowohl des Fernwärme-Mediums 3 als auch des Brauchwassers (KW/WW) übertragen werden, wobei die Rücklauf-Temperatur $T_{RF}$ des Fernwärme-Mediums 3 zum Fernwärme-Erzeuger 5 hin nicht höher als zB 20 $^{o}$C und die Auslauf-Temperatur $T_{AW}$ des Brauchwassers (WW) zum WW-Speicher 2 hin nicht niedriger als zB 55 $^{o}$C sein soll. Die Temperaturwerte $T_{RF}$ und $T_{AW}$ sind in Anpassung an die jeweiligen Gegebenheiten am Regelgerät 18 beliebig festlegbar.

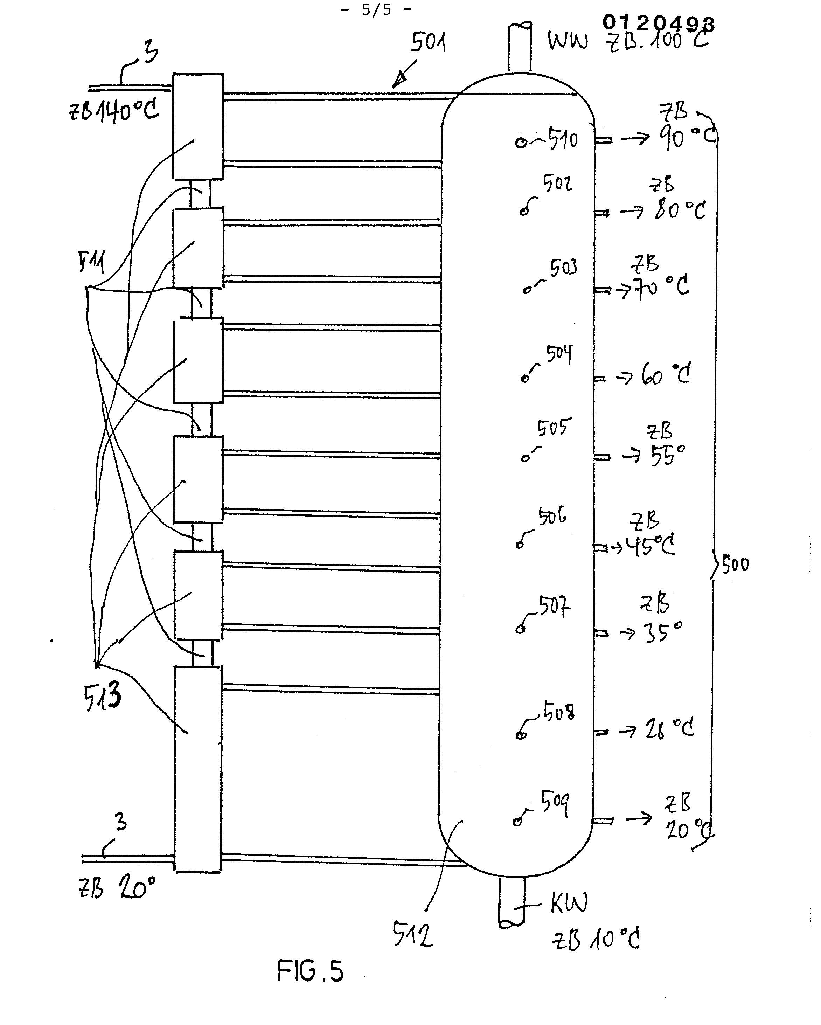

Fig. 5 zeigt im Schema eine Anordnung 501 gemäß der Erfindung mit einer Vielzahl von Gegenstrom-Wärmetauschern 513, die mit einem großen WW-Speicher 512 im Prinzip in der bereits in Fig. 2 gezeigten Weise verbunden sind. Zwischen den einzelnen Teilen von 513 befinden sich die üblichen Regelungs-Armaturen, wie in Fig. 2 schon dargrstellt. Der WW-Speicher 512 weist eine Reihe von Thermofühlern 502 bis 510 auf, die dem (hier nicht gezeigten) Regelgerät die erforderlichen Temperatur-Informationen liefert, um in dem großen System die richtigen Regel-Befehle an die richtigen Aggregate zum richtigen Zeitpunkt liefern zu können. Ziel dieser Anordnung 501 ist es, im WW-Speicher (der auch aus mehreren räumlich voneinander getrennten Einzel-Speichern bestehen kann) eine praktisch stufenlose Schichtung des Brauchwassers von etwa 10 $^{o}$C bis zur Siedegrenze 100 $^{o}$C oder bei Dampf auch höher zu erreichen. Durch Seitenanzapfungen könnte zB 20,28,35,45,55,60,70,80 oder 90 $^{o}$C temperiertes Brauchwasser aus dem WW-Speicher 512 entnommen werden, was in Wäschereien mit Durschmöglichkeit usw. recht interessant sein könnte. Auch hier könnte das mit ca 140 $^{o}$C angelieferte Fernwärme-Medium 3 mit höchstens 20 $^{o}$C in die Rücklauf-Leitung zurückgeführt werden.

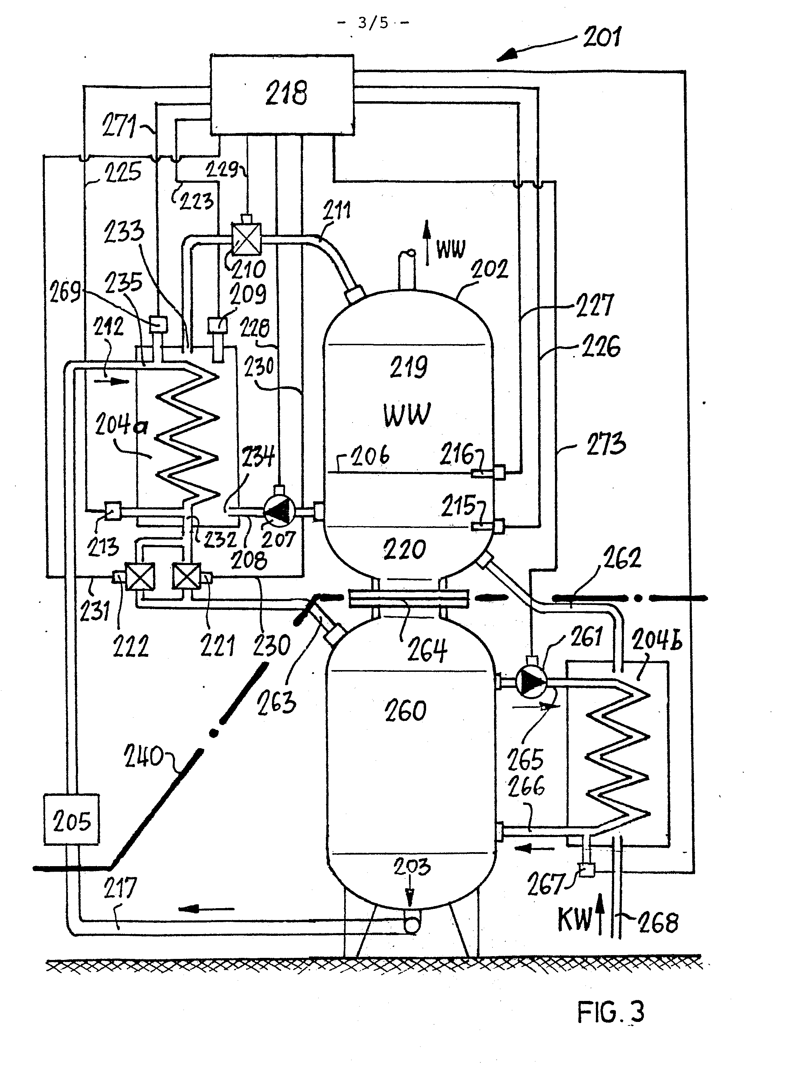

In Fig. 3 ist eine dritte Ausführungsform der Erfindung dargestellt, die im Prinzip der in Fig. 1 gezeigten und vorstehend beschriebenen Ausführungsform entspricht.

Der Unterschied liegt gegenüber der Ausführungsform gemäß Fig. 1 darin, daß man den Wärmetauscher 4 (Fig. 1) in zwei voneinander getrennte Gegenstrom-Wärmetauscher 204a und 204b unterteilt, wobei der Wärmetauscher 204b das in den unteren Teil 220 des WW-Speichers 202 einströmende Brauchwasser mittels des Fernwärme-Mediums 203, das aus einem unter dem WW-Speicher 202 angeordneten Zwischenspeicher 260 durch eine in einer Rohrleitung 265 angeordnete Pumpe 261 in den Gegenstrom-Wärmetauscher 204b geführt wird, auf ein höheres Temperatur-Niveau (zB von 10 auf 20 $^{o}$C) vorwärmt. Eine Steuerleitung 273 verbindet Pumpe 261 mit Regelgerät 218. Im WW-Speicher 202 befindet sich somit Brauchwasser mit etwa 30 $^{o}$C im unteren Teil 220 und etwa 55 $^{o}$C im oberen Teil, bei Normalbetrieb. Die Aufheizung von 30 $^{o}$C auf 55 $^{o}$C erfolgt rascher als beim Beispiel gemäß Fig. 1.

Der Zwischenspeicher 260 weist ein Temperaturgefälle von etwa 20 $^{o}$C im unteren Teil und etwa 30 $^{o}$C im oberen Teil auf.

Der Thermofühler 267 im Gegenstrom-Wärmetauscher 204b mißt die Rücklauf-Temperatur $T_{RF}$ des Fernwärme-Mediums 203 in der Rohrleitung 266 vor Einleitung in den Zwischenspeicher 260 unten und meldet diese an das Regelgerät 218. Wird die geforderte Temperatur von zB $T_{RF}$ = 20 $^{o}$C unterschritten, so läuft die Pumpe 261 schneller. Wird diese Temperatur von zB $T_{RF}$ = 20 $^{o}$C überschritten, so läuft die Pumpe 261 langsamer.

So regelt das Regelgerät 218 die Abkühlung innerhalb des Zwischenspeichers 260 von oben (zB 30 $^{o}$C) nach unten (zB 20 $^{o}$C).

Außer der Pumpe 261 könnte in der Rohrleitung 266 auch ein Ventil, Schieber od. dgl. vorgesehen sein, welches die Durchflußmenge von Fernwärme-Medium 203 durch den Gegenstrom-Wärmetauscher 204b reguliert. Strömt nun zum Zwecke der Aufheizung Fernwärme-Medium 203, aus der Vorlaufleitung 212 kommend in den Gegenstrom-Wärmetauscher 204a ein, so wird das auf beispielsweise 30 $^\circ$C gekühlte Fernwärme-Medium 203 über die Rohrleitung 263 in den oberen Teil des Zwischenspeichers 260 gefördert. Dadurch wird das im unteren Teil des Zwischenspeichers 260 stehende Fernwärme-Medium 203 von 20 $^\circ$C über die Rücklaufleitung 217 zum Fernwärme-Erzeuger 205 zurückfließen.

Nachfolgend wird zum besseren Verständnis der erfindungsgemässen Anordnung 201 deren in Fig. 3 gezeigte schematische Darstellung näher beschrieben. Da der über der strichpunktierten Linie 240 gezeigte Teil im wesentlichen der Anordnung 1 gemäß Fig. 1 entspricht, kann auf dessen Erläuterung hier verzichtet werden. Die übereinstimmenden Teile der Anordnung 1 gemäß Fig. 1 sowie der Anordnung 201 gemäß Fig. 3 sind zum besseren Verständnis jeweils mit der gleichen Bezugsziffer versehen, jedoch mit der Maßgabe, daß in Fig. 3 zu den mit den Bezugsziffern gemäß Fig. 1 identischen Bezugsziffern jeweils die Zahl 200 hinzuaddiert ist (also anstelle 1 = 201, 3 = 203 usw.). Es entspechen sich also folgende Teile in Fig. 1 und Fig. 3:

| | | | |
|---|---|---|---|
| 1 = 201 | 9 = 209 | 19 = 219 | 29 = 229 |
| 2 = 202 | 10 = 210 | 20 = 220 | 30 = 230 |
| 3 = 203 | 11 = 211 | 21 = 221 | 31 = 231 |
| 4 = 204a | 12 = 212 | 22 = 222 | 32 = 232 |
| 5 = 205 | 13 = 213 | 23 = 223 | 33 = 233 |
| 6 = 206 | 15 = 215 | 26 = 226 | 34 = 234 |
| 7 = 207 | 16 = 216 | 27 = 227 | 35 = 235 |
| 8 = 208 | 18 = 218 | 28 = 228 | |

Außer den mit den Teilen gemäß Fig. 1 übereinstimmenden Teilen der oberen Hälfte der Anordnung 201 gemäß Fig. 3 weist diese noch folgende weitere Teile auf:

Am Eingang 235 für das Fernwärme-Medium 203 am Gegenstrom-Wärmetauscher 204a ist ein Thermofühler 269 mit einer zum

0120493

Bezugszeichenliste (Fig. 1):

1   Anordung
2   WW-Speicher
3   Fernwärme-Medium
4   Gegenstrom-Wärmetauscher
5   Fernwärme-Erzeuger
6   Schichtgrenze (zwischen KW/WW an 16)
7   Pumpe (in 8)
8   KW-Rohrleitung (von 2 nach 4)
9   Thermofühler (von WW in 4)
10  Ventil, Schieber od. dgl. (in 11)
11  WW-Rohrleitung (von 4 nach 2)
12  (Fernwärme-)Vorlaufleitung (von 5 nach 4)
13  Thermofühler (von 3 in 4)
14  Thermofühler (von KW in 4)
15  Thermofühler (in 2)
16  Thermofühler (bei 6 in 2)
17  (Fernwärme-)Rücklaufleitung (von 4 nach 5)
18  Regelgerät (zur Steuerung von 7,10,21,22)
19  WW (im oberen Teil von 2)
20  KW (im unteren Teil von 2)
21  Ventil, Schieber od. dgl. (in 17)
22  Ventil, Schieber od. dgl. (in 17 als Bypass von 21)
23  Temperatur-Meßleitung (von 9 nach 18)
24  Temperatur-Meßleitung (von 14 nach 18)
25  Temperatur-Meßleitung (von 13 nach 18)
26  Temperatur-Meßleitung (von 15 nach 18)
27  Temperatur-Meßleitung (von 16 nach 18)
28  Steuerleitung (von 18 nach 7)
29  Steuerleitung (von 18 nach 10)
30  Steuerleitung (von 18 nach 21)
31  Steuerleitung (von 18 nach 22)
32  Ausgang (von 4 mit 3/kalt)
33  Ausgang (von 4 mit WW)
34  Eingang (von 4 mit KW)
35  Eingang (von 4 mit 3/warm)


KW    Kaltwaser
WW    Warmwasser
$D_F$    Durchflußmenge (von 3)
$D_W$    Durchflußmenge (von WW)
$T_{AW}$  Auslauf-Temperatur (von WW)
$T_{RF}$  Rücklauf-Temperatur (von 3)

Bezugszeichenliste (Fig. 2):

101  Anordnung
102a WW-Speicher (oberer Teil)
102b WW-Speicher (unterer Teil)
103  Fernwärme-Medium
104a Gegenstrom-Wärmetauscher (oberer Teil)
104b Gegensntrom-Wärmetauscher (unetrer Teil)
105  Fernwärme-Erzeuger
106  Schichtgrenze (zwischen KW/WW an 116)
107  Pumpe (in 108)
108  KW-Rohrleitung (von 102a nach 104a)
109  Thermofühler (von WW in 104a)
110  Ventil, Schieber od. dgl. (in 111)
111  WW-Rohrleitung (von 104a nach 102a)
112  (Fernwärme-)Vorlaufleitung (von 105 nach 104a)
113  Thermofühler (von 103/kalt in 104b an 132)
114  Thermofühler (von KW in 104b an 134)
115  Thermofühler (in 102a)
116  Thermofühler (bei 106 in 102a)
117  (Fernwärme-)Rücklaufleitung (von 104b nach 105)
118  Regelgerät
119  WW (im oberen Teil von 102a)
120  KW (im unteren Teil von 102b)
121  Ventil, Schieber od. dgl. (zwischen 104a/104b in 150)
122  Ventil, Schieber od. dgl. (zwischen 104a/104b als
     By-Pass von 121 in 150)
123  Temperatur-Meßleitung (von 109 nach 118)
124  Temperatur-Meßleitung (von 113 nach 118)
125  Temperatur-Meßleitung (von 114 nach 118)
126  Temperatur-Meßleitung (von 115 nach 118)
127  Temperatur-Meßleitung (von 116 nach 118)
128  Steuerleitung (von 118 nach 107)
129  Steuerleitung (von 118 nach 110)
130  Steuerleitung (von 118 nach 121)
131  Steuerleitung (von 118 nach 122)
132  Ausgang (von 104b mit 103/kalt)
133  Ausgang (von 104a mit WW)
134  Eingang (von 104b mit KW)
135  Eingang (von 104a mit 103/warm)
136  Pumpe (in 137)
137  Rohrleitung (zwischen 102b/104b)
138  Ventil, Schieber od. dgl. (in 139)
139  Rohrleitung (zwischen 104b/102b)

141  Thermofühler (von WW in 104b)
142  Thermofühler (von WW in 104a)
143  Thermofühler (von 103/warm in 104a an 135)
144  Steuerleitung (von 118 nach 136)
145  Steuerleitung (von 118 nach 138)

147  Temperatur-Meßleitung (von 141 nach 118)
148  Temperatur-Meßleitung (von 142 nach 118)
149  Temperatur-Meßleitung (von 143 nach 118)
150  Verbindungsleitung (zwischen 104a/104b)
151  Engstelle (an Übergang zwischen 102a/102b)


  KW  Kaltwasser
  WW  Warmwasser

Bezugszeichenliste (Fig. 3):

201  Anordnung
202  WW-Speicher
203  Fernwärme-Medium
204a Gegenstrom-Wärmetauscher
204b Gegenstrom-Wärmetauscher
205  Fernwärme-Erzeuger
206  Schichtgrenze (zwischen KW/WW an 216)
207  Pumpe
208  KW-Rohrleitung (von 202 nach 204a)
209  Thermofühler (von WW in 204a)
210  Ventil, Schieber (in 211)
211  WW-Rohrleitung (von 204a nach 202)
212  (Fernwärme-)Vorlaufleitung (von 205 nach 204a)
213  Thermofühler (von 203/abgekühlt in 204a)

215  Thermofühler (in 202)
216  Thermofühler (bei 206 in 202)
217  (Fernwärme-)Rücklaufleitung (von 260 nach 205)
218  Regelgerät
219  WW (im oberen Teil von 202)
220  KW (im unteren Teil von 202)
221  Ventil, Schieber od.dgl. (zwischen 204a/260)
222  Ventil, Schieber od.dgl. (zwischen 204a/260 als
     By-Pass zu 221)
223  Temperatur-Meßleitung (von 209 nach 218)

225  Temperatur-Meßleitung (von 213 nach 218)
226  Temperatur-Meßleitung (von 215 nach 218)
227  Temperatur-Meßleitung (von 216 nach 218)
228  Steuerleitung (von 218 nach 207)
229  Steuerleitung (von 218 nach 210)
230  Steuerleitung (von 218 nach 221)
231  Steuerleitung (von 218 nach 222)
232  Ausgang (von 204a mit 203/abgekühlt)
233  Ausgang (von 204a mit WW)
234  Eingang (von 204a mit vorgewärmtem KW)
235  Eingang (von 204a mit 203/warm)

260  Zwischenspeicher (für 203)
261  Pumpe (in 265)
262  Rohrleitung (zwischen 202/204b)
263  Rohrleitung (zwischen 260/204b - Vorlauf  von 203)
264  Dichtplatte (zwischen 202/260)
265  Rohrleitung (zwischen 260/204b)
266  Rohrleitung (zwischen 204a/260 - Rücklauf von 203)
267  Thermofühler (in 266)
268  KW-Zulauf
269  Thermofühler (in 212) - gleiche Funktion wie 143
271  Temperatur-Meßleitung (von 269 nach 218)
273  Steuerleitung (von 218 nach 261)

  WW  Warmwasser
  KW  Kaltwasser

0120493

Friedrich Müller
Im Mühlfeld 31
D-7180 Crailsheim

Patentansprüche

1. Anordnung zur Warmwasser-Bereitung mittels eines durch einen Gegenstrom-Wärmetauscher geführten, von einem Fernwärme-Erzeuger angelieferten Fernwärme-Mediums sowie zur Warmwasser-Bevorratung in einem Warmwasser-Speicher, dadurch gekennzeichnet, daß durch von einem Regelgerät (18) koordinierte Einrichtungen (7,9,13,16,21) zur Regelung sowohl der Durchflußmenge ($D_F$) des am Eingang (35) des Gegenstrom-Wärmetauschers (4) mit einer bestimmten Vorlauf-Temperatur ($T_{VF}$) angelieferten Fernwärme-Mediums (3) als auch der Durchflußmenge ($D_W$) des dem Eingang (34) des Gegenstrom-Wärmetauschers (4) mit einer bestimmten Einlauf-Temperatur ($T_{EW}$) zugeführten Kaltwassers (KW) – in Abhängigkeit von einer beliebig festlegbaren Höchst-Rücklauf-Temperatur ($T_{HRF}$) des Fernwärme-Mediums (3) und einer beliebig festlegbaren Mindest-Auslauf-Temperatur ($T_{MAW}$) des Warmwassers (WW) an den Ausgängen (32,33) des Gegenstrom-Wärmetauschers (4) – die jeweiligen Durchflußmengen ($D_F,D_W$) des Fernwärme-Mediums (3) und des Warmwassers (WW) durch den Gegenstrom-Wärmetauscher (4) unabhängig voneinander derart dosierbar sind, daß die Rücklauf-Temperatur ($T_{RF}$) des zum Fernwärme-Erzeuger (5) zurückzuführenden Fernwärme-Mediums (3) eine beliebig festlegbare Höchst-Rücklauf-Temperatur ($T_{HRF}$) unter Toleranz einer beliebig festlegbaren Temperatur-Abweichung ($\Delta T_{HRF}$) nicht überschreitet, und daß die Auslauf-Temperatur ($T_{AW}$) des dem Warmwasser-Speicher (2) zuzuführenden Warmwassers (WW) eine beliebig festlegbare Mindest-Auslauf-Temperatur ($T_{MAW}$) unter Toleranz einer beliebig festlegbaren Temperatur-Abweichung ($\Delta T_{MAW}$) nicht unterschreitet und höchstens bis zu einer beliebig festsetzbaren Höchst-Auslauf-Temperatur ($T_{HAW}$) hin unter Toleranz einer einer beliebig festlegbaren Temperatur-Abweichung ($\Delta T_{HAW}$) nicht überschreitet.

2. Anordnung nach Anspruch 1, dadurch gekennzeichnet, daß die Einrichtungen (7,9,13,16,21) folgende Teile umfassen:

   (a) eine in einem von einer Kaltwasser-Zone (20) des WW-Speichers (2) zum Kaltwasser-Eingang (34) des Gegenstrom-Wärmetauschers (4) führenden Rohrleitung (8) angeordnete Pumpe (7),

   (b) einen am Warmwasser-Ausgang (33) des Gegenstrom-Wärmetauschers (4) angeordneten Thermofühler (9),

   (c) einen am Ausgang (32) für das Fernwärme-Medium (3) des Gegenstrom-Wärmetauschers (4) angeordneten Thermofühler (13),

   (d) einen an der Schichtgrenze (6) zwischen der Kaltwasser-Zone (20) und der Warmwasser-Zone (19) im/am WW-Speicher (2) angeordneten Thermofühler (16) sowie

   (e) ein am Ausgang (32) für das Fernwärme-Medium (3) des Gegenstrom-Wärmetauschers (4) vor dem Eingang in die Rücklauf-Leitung (17) angeordnetes Ventil (21), Schieber od. dgl.

3. Anordnung nach Anspruch 1 oder 2, dadurch gekennzeichnet, daß zur Feststellung eines außergewöhnlichen Betriebszustandes im/am WW-Speicher (2) unterhalb des Thermofühlers (16) ein weiterer Thermofühler (15) angeordnet ist.

4. Anordnung nach einem der Ansprüche 1 bis 3, dadurch gekennzeichnet, daß dem Ventil (21), Schieber od. dgl. ein weiteres Ventil (22), Schieber od. dgl. parallelgeschaltet ist.

5. Anordnung nach einem der Ansprüche 1 bis 4, dadurch gekennzeichnet, daß am Kaltwasser-Eingang (34) des Gegenstrom-Wärmetauschers (4) ein Thermofühler (14) zur Feststellung der dort jeweils herrschenden Temperatur vorgesehen ist.

6. Anordnung nach einem der Ansprüche 1 bis 5, dadurch gekennzeichnet, daß das von den Thermofühlern (9,13,14,15,16) über die jeweiligen Temperaturen im Gegenstrom-Wärmetauscher (4) und/oder WW-Speicher (2) unterrichtete Regelge-

über die jeweiligen Temperaturen im Gegenstrom-Wärmetauscher (4) und/oder WW-Speicher (2) unterrichtete Regelgerät (18) die Pumpe (7), ein gegebenenfalls in die vom Gegenstrom-Wärmetauscher (4) zum WW-Speicher (2) führende Rohrleitung (11) eingefügtes Ventil (10), Schieber od. dgl., das Ventil (21) und gegebenenfalls das als By-Pass zum Ventil (21) dienende Ventil (22), Schieber od. dgl. derart regelt, daß die Rücklauf-Temperatur des Fernwärme-Mediums (3) eine bestimmte, beliebig festsetzbare Höchst-Rücklauf-Temperatur ($T_{RF}$) nicht überschreitet, und daß die Ausgangs-Temperatur des Warmwassers (WW) eine bestimmte, beliebig festsetzbare Mindest-Ausgangs-Temperatur ($T_{AW}$) nicht unterschreitet.

7. Anordnung nach Anspruch 6, dadurch gekennzeichnet, daß Die Höchst-Rücklauf-Temperatur ($T_{RF}$) des Fernwärme-Mediums (3) 20 $^{\circ}$C und die Mindest-Ausgangs-Temperatur ($T_{AW}$) des Warmwassers (WW) 55 $^{\circ}$C betragen.

8. Anordnung nach einem der Ansprüche 1 bis 7, dadurch gekennzeichnet, daß sowohl der Gegenstrom-Wärmetauscher (4) als auch der WW-Speicher (2) jeweils mehrgeteilt, vorzugsweise zwei-geteilt sind, worin die Temperatur des angelieferten Fernwärme-Mediums (3) stufenweise, jedoch innerhalb der Stufe kontinuierlich abkühlbar ist, bzw. worin das Brauchwasser vom Kaltwasser (KW) zum Warmwasser (WW) stufenweise, jedoch innerhalb der Stufe kontinuierlich erwärmbar ist.

9. Anordnung nach einem der Ansprüche 1 bis 8, dadurch gekennzeichnet, daß sowohl der Gegenstrom-Wärmetauscher (4) als auch der WW-Speicher (2) jeweils in eine Vielzahl von einzelnen Stufen derart unterteilt sind, daß sich im WW-Speicher (2) eine fast stufenlose Schichtung an Warmwasser (WW) zwischen etwa 10 und 100 $^{\circ}$C ergibt, die durch eine Vielzahl von längs dieser Schichtung am WW-Speicher (2) verteilt angeordneten Thermofühlern durch

- 4 -     0120493

entsprechende Regelung durch das Regelgerät (18) stabil gehalten wird, und daß der WW-Speicher (2) längs der Schichtung mit einer Reihe von Seiten-Anzapfungen (500) versehen ist, aus denen nach Bedarf kälteres, mittleres warmes oder heißes Brauchwasser entnehmbar ist.

10. Anordnung nach einem der Ansprüche 1 bis 9, dadurch gekennzeichnet, daß bei Unterteilung des WW-Speichers (2) in mehrere Einzel-Speicher (102a,102b) letztere sowohl übereinander als auch nebeneinander angeordnet werden können.

11. Anordnung nach einem der Ansprüche 1 bis 10, dadurch gekennzeichnet, daß bei großen WW-Bedarf der hierfür gewählte WW-Speicher (2) einteilig als auch mehrteilig sein kann.

12. Anordnung nach einem der Ansprüche 1 bis 11, dadurch gekennzeichnet, daß für das Fernwärme-Medium (3) ein größerer Zwischenspeicher (260) als Puffer vorgesehen ist.

13. Anordnung nach eonem der Ansprüche 1 bis 12, dadurch gekennzeichnet, daß der Thermofühler (16,116,216) im/am WW-Speicher (2,102a,202a) zur Verlagerung der Schichtgrenze (6,106,206) in verschiedener Speicherhöhe fest oder durch einfaches Verschieben längs der WW-Speicher-Achse stufenlos nach oben oder nach unten verstellbar lösbar angeordnet und angebracht ist.

0120493

FIG.1

0120493

FIG.2

0120493

FIG. 3

Temperaturverlauf des Fernwärme-Mediums (3)
(mit praktisch linearem Temperaturabfall)
sowie des Brauchwassers (KW/WW)
(mit praktisch linearem Temperaturanstieg)
bei Durchlauf durch einen Gegenstrom-Wärmetauscher (4) (z. Ausführungsform gem.Fig.1)

T (°C)

Durchflußrichtung

Brauchwasser (KW/WW) ←

Fernwärme-Medium (3) →

T (°C)

150

100

50

0

100

50

Eingang (35)
Fernwärme-
Medium (3)

Ausgang (33)
Warmwasser
(WW)

$T_{AW} = 55\ °C$

$T_{RF} = 20\ °C$

Ausgang (32)
Fernwärme-
Medium (3)

Eingang (34)
Kaltwasser (KW)

Länge des
Gegenstrom-Wärmetauschers (4)

FIG.4

0120493

FIG.5